# EUROPÄISCHE PATENTSCHRIFT

(11) **EP 3 101 875 B1**
(45) Veröffentlichungstag und Bekanntmachung des Hinweises auf die Patenterteilung: **29.08.2018**
(21) Anmeldenummer: 16172626.0
(22) Anmeldetag: 02.06.2016
(51) Int. Cl.: G06F 21/44, G06F 21/62, H04L 29/06, H04L 29/08

(54) **ÄNDERN VON EINSTELLUNGEN EINER AUF EINEM MOBILEN ENDGERÄT LAUFENDEN APPLIKATION**
CHANGING THE SETTINGS OF AN APPLICATION RUNNING ON A MOBILE TERMINAL
MODIFICATION DE REGLAGES D'UNE APPLICATION EXECUTE PAR UN TERMINAL MOBILE

(30) Priorität: 02.06.2015 DE 102015108714
(43) Veröffentlichungstag der Anmeldung: 07.12.2016
(73) Patentinhaber: Deutsche Telekom AG, 53113 Bonn (DE)
(72) Erfinder: WANG, Hao, 53175 Bonn (DE); BURKERT, Stefan, 53173 Bonn (DE)
(74) Vertreter: Braun-Dullaeus Pannen Patent- und Rechtsanwälte

(56) Entgegenhaltungen:
- US-A1- 2005 166 264
- US-A1- 2014 298 420
- US-B1- 8 843 122
- Anonymous: "Creating a Content Provider | Android Developers", , 8. April 2015 (2015-04-08), XP055313961, Gefunden im Internet: URL:http://web.archive.org/web/20150408152 206/http://developer.android.com/guide/top ics/providers/content-provider-creating.ht ml#ContentProvider [gefunden am 2016-10-26]
- Anonymous: "Bluetooth | Android Developers", , 8. April 2015 (2015-04-08), XP055313957, Gefunden im Internet: URL:http://web.archive.org/web/20150408075 020/http://developer.android.com/guide/top ics/connectivity/bluetooth.html#SettingUp [gefunden am 2016-10-26]
- Anonymous: "BluetoothAdapter | Android Developers", , 8. April 2015 (2015-04-08), XP055313966, Gefunden im Internet: URL:http://web.archive.org/web/20150408071 657/http://developer.android.com/reference /android/bluetooth/BluetoothAdapter.html#e nable() [gefunden am 2016-10-26]

## Beschreibung

Die Erfindung betrifft ein Verfahren zum Einstellen von Einstellungen innerhalb eines mobilen elektronischen Endgeräts.

Aus der DE 10 2013 017 051 A1 ist ein mobiles elektronisches Endgerät beschrieben, welches einen berührungsempfindlichen Bildschirm aufweist. Die Systemeinstellungen können von einem Nutzer über ein Einstellungspaneel geändert werden, welches Bestandteil einer zum Betriebssystem zugehörigen Systemanwendung ist.

Das US 8,843,122 B1 zeigt ein Verfahren zur Änderung von Einstellungen in einem mobilen Endgerät, wobei das IC API ("interface control application programming interface") Berechtigungen vergibt, bevor eine Änderung von Einstellungen ermöglicht wird.

Aus der US 2014/0298420 A1 ist eine Methode zum Management des Zugriffs mobiler Endgeräte auf Unternehmensrecourcen unter Verwendung eines Zugriffsmanagers ("access manager") gezeigt, der zur Identifikation einer mobilen Anwendung beispielsweise Namen oder Zertifikate verwendet.

Die Systemeinstellungen sind bei heutigen Mobiltelefonen ein sicherheitsrelevanter Aspekt. Über die Systemeinstellungen lassen sich grundlegende Funktionen und Eigenschaften des Mobiltelefons aktivieren und anpassen. Die Systemeinstellungen legen dabei Parameter der anwendungsübergreifenden Funktionsweise des Mobiltelefons fest. Anhand der Systemeinstellungen kann beispielsweise festgelegt werden, ob und über welche Datenverbindungen Kontakt zum Internet besteht und welche Sensoren des Mobiltelefons aktiv sind. Auch können Berechtigungen einzelner Anwendungen zum Zugriff auf Ressourcen des Mobiltelefons anhand der Systemeinstellungen festgelegt werden.

Die Systemeinstellungen können in der Regel nur vom Nutzer selbst anhand des Einstellungspaneels einer Systemanwendung oder vom Betriebssystem selbst geändert werden; aus Sicherheitsgründen werden Änderungszugriffe auf die Systemeinstellungen von Nutzeranwendungen, die u.a. über sogenannte App-Stores bezogen werden können, also frei installierbar sind, unterbunden.

Derartige Nutzeranwendungen, auch "Apps" oder Anwendungssoftware genannt, erfreuen sich heutzutage großer Beliebtheit. Sie werden vom Nutzer je nach Betriebssystem online auf ein Mobiltelefon geladen und befähigen dieses über die Auswahl eines dargebotenen Icons zur Ausführung unterschiedlichster Funktionalitäten. Dabei reicht die Bandbreite solcher Apps von einfachsten Werkzeugen und Spaßanwendungen bis hin zu komplexen Anwenderprogrammen und Computerspielen. Viele Apps ermöglichen auch eine effiziente Nutzung bestimmter Webanwendungen oder verschaffen einen einfachen Zugang zu Informationsangeboten. Durch die Bestückung mit Apps wird jedes Mobiltelefon zu einem individuell konzipierten Hilfsmittel, das für den Nutzer nicht nur einen hohen materiellen sondern auch einen entsprechend ideellen Wert darstellt.

Allerdings könnte die Funktionalität und Benutzerfreundlichkeit eines Mobiltelefons bzw. einer darauf ablaufenden Anwendung deutlich erhöht werden, wenn eine Nutzeranwendung Änderungen an den Systemeinstellungen durchführen könnte, um so z.B. trotz über die Systemeinstellung ausgeschalteter Internetverbindung dennoch kurzfristig eine Information aus dem Internet zu beziehen.

Bislang gibt es keine flexible Möglichkeit, die Systemeinstellungen einer ersten App A mittels einer zweiten App B zu verändern. Dabei ist es grundsätzlich schwierig, unter Android Systemeinstellungen einer "Non-System" App, mithin einer App, die nicht in der Systempartition installiert ist, zu ändern. Um Systemeinstellungen zu ändern, muss eine App mit einem Systemzertifikat signiert oder in der Systempartition vorinstalliert sein. Wenn zwei Apps mit demselben Zertifikat signiert sind, können mittels der einen App die Daten der anderen App geändert werden. Wenn die Apps hingegen nicht mit dem selben Zertifikat signiert sind, gibt es keinen Weg die Systemeinstellungen oder die Daten auf einem sicheren Weg zu ändern.

Es ist daher die Aufgabe der vorliegenden Erfindung, ein Verfahren zum Betreiben eines mobilen elektronischen Endgeräts bereitzustellen, mit dem ein Änderungszugriff von Nutzeranwendungen auf die Systemeinstellungen unter sicheren Bedingungen möglich ist.

Diese Aufgabe wird gelöst durch ein Verfahren nach Anspruch 1 sowie ein mobiles Endgerät nach Anspruch 8; bevorzugte Ausgestaltungen ergeben sich aus den Unteransprüchen sowie der nachfolgenden Beschreibung.

Der Kern der Erfindung liegt in der Durchführung einer Sicherheitsüberprüfung, wobei eine angefragte erste Anwendung respektive Applikation ("App A") die Anfrage der anfragenden zweiten Applikation ("App B") über deren Namen und deren Zertifikat verifizieren kann. Die Anfrage im Hinblick auf die Änderung einer Systemeinstellung wird nur akzeptiert, wenn App B in einer in App A geführten Liste gesicherter Applikationen ("trusted Apps") zu finden ist. So ist sichergestellt, dass nur trusted Apps Anfragen bezüglich Systemeinstellungen an App A, die ein Systemagent oder eine einfache Nutzerapplikation sein kann, stellen können, die dann entsprechend ausgeführt werden. App A kann ihre internen Einstellungen oder Daten ändern, wenn der Request verifiziert ist.

Der Kern der Erfindung liegt damit insbesondere in der Möglichkeit, bestimmten gesicherten (zweiten) Anwendungen einen mittelbaren Änderungszugriff auf Systemeinstellungen oder einen unmittelbaren Änderungszugriff auf Einstellungen einer normalen Anwendung zu gewähren. Als Voraussetzung ist vorgesehen, dass diese gesicherte Anwendung über eine Berechtigung für diesen mittelbaren Änderungszugriff verfügt. Diese Berechtigung wird vor der tatsächlichen Umsetzung der gewünschten Änderung überprüft; nur im Falle einer positiven Überprüfung wird die angefragte Änderung auch durchgeführt.

Die Überprüfung der Berechtigung wird vorzugsweise durch die erste Anwendung durchgeführt, die insbesondere auch über einen unmittelbaren Änderungszugriff auf die zu ändernden Einstellungen verfügt. Im Gegensatz dazu verfügt die zweite Anwendung nicht über einen unmittelbaren Zugriff, sondern kann lediglich die erste Anwendung veranlassen, die Änderungen durchzuführen; dieser eingeschränkte Zugriff ist durch den Begriff "mittelbarer Änderungszugriff" ausgedrückt.

Das Verfahren kann in einer ersten Variante zur Änderung von Systemeinstellungen des Endgeräts genutzt werden. Die erste Anwendung ("App A") ist diesem Fall eine Systemanwendung, die über Fähigkeiten verfügt, die Systemeinstellungen unmittelbar zu ändern. Auf berechtigte Veranlassung der zweiten Anwendung ändert dann die Systemanwendung die Systemeinstellungen des Endgeräts.

Das Verfahren kann in einer zweiten Variante genutzt werden, um Einstellungen der ersten Anwendung, der normalen Nutzeranwendung durchzuführen. Auf berechtigte Veranlassung der zweiten Anwendung ändert dann die erste Nutzeranwendung ihre eigenen Einstellungen.

Vorzugsweise ist eine Liste ("white List") von berechtigten weil gesicherten Applikationen auf einem zentralen Server hinterlegt. Auf diese Liste kann die erste Anwendung vor und/oder während der Überprüfung zugreifen. Im Rahmen der Überprüfung wir die Anfrage der zweiten Anwendung ("App B") hinsichtlich der Änderung von Systemeinstellungen abgeglichen. Die Liste kann auch lokal abgespeichert werden, was eine Überprüfung auch ohne vorhandene Internetverbindung ermöglicht. Dafür können berechtigte gesicherte Anwendungen zu einem vorherigen Zeitpunkt von dem Server heruntergeladen sein. Es bietet eine besondere Flexibilität bei der Gewährung von Anfragen, wenn die Liste zentral auf einem Server gespeichert ist. Damit wird es möglich, das Zugriffsecht der zweiten Applikation ("App B") seitens des Servers zu kontrollieren, so dass das Zugriffsecht jederzeit wiederrufen werden kann.

Die Besonderheit der erfindungsgemäßen Vorgehensweise liegt in dem strikten "security check", der sowohl die Übereinstimmung von App Namen als auch von Zertifikaten notwendig macht. Mit der erfindungsgemäßen Vorgehensweise kann eine App die Systemeinstellungen und/oder die Daten einer anderen App auf flexible Weise und unter Kontrolle des Backends ändern. Eine weitere Besonderheit liegt darin, dass ein Systemagent eine sichere Schnittstelle zu "normalen" Apps bereitstellt, um Systemsettings zu ändern.

In einer besonderen Ausführungsform kann eine erste Anwendung ("App A") verschiedene Kategorien von Zugriffsrechten in der Whitelist generieren, so dass beispielsweise eine App B nur die internen Einstellungen von App A ändern kann, während eine App C Systemeinstellungen vermittels der App A ändern kann. Damit ist der App A eine feinere Kontrolle bezüglich der Anfragen von zweiten Anwendungen ermöglicht.

Wenn die App A Zugang zu privilegierten Programmierschnittstellen (API) oder Systemdaten hat, kann die App A die APIs ausführen oder die Systemdaten im Falle einer verifizierten Anfrage seitens App B ändern. In diesem Fall ist App A ein Systemagent, der Anfragen von normalen Apps empfangen kann. Damit wird es der "normalen" App B ermöglicht, die Systemsettings und Daten zu ändern.

Die Erfindung wird anhand der Figuren näher erläutert. Hierin zeigt
- **Figur 1**: ein Verfahrensablauf in einer ersten Variante,
- **Figur 2**: schematisch den erfindungsgemäßen Verfahrensablauf in einer weiteren Variante,
- **Figur 3**: schematisch den erfindungsgemäßen Verfahrensablauf in einer weiteren Variante.

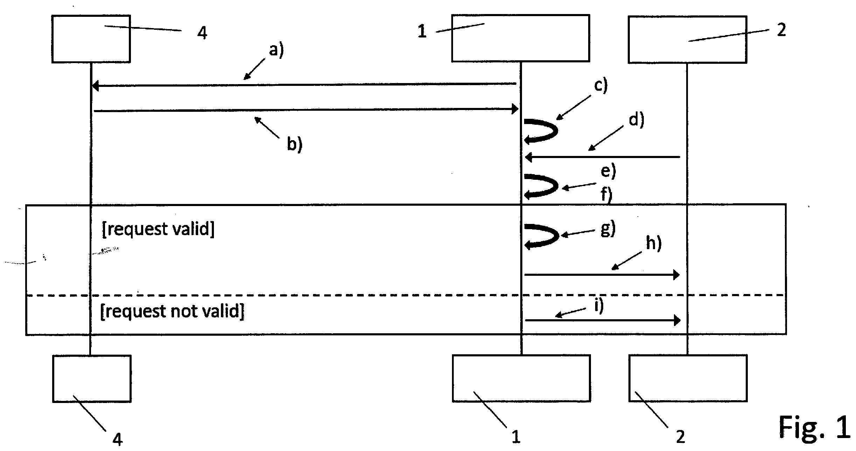

Figur 1 zeigt den Ablauf, mit dem eine gesicherte Applikation ("Trusted App") 2 die Systemeinstellungen über einen Systemagenten 1 verändern kann. Dabei ist ein Systemagent eine Applikation ("App"), die einen Anfragen der gesicherten Applikation aufnimmt und entsprechende Änderungen an den Systemeinstellungen und/oder Daten vornimmt. Die gesicherte Applikation 2 ist autorisiert, eine solche Anfrage hinsichtlich einer Änderung an den Systemagenten 1 zu senden. Der nachfolgend gezeigte Ablauf ist derselbe, wenn der Systemagent 1 eine "normale" Nutzerapplikation ist, die aus einem App-Store auf das Endgerät geladen wurde. In diesem Fall können über die gesicherte Applikation 2 die internen Einstellungen der Nutzerapplikation 1 verändert werden.

Zunächst fordert der Systemagent 1 respektive die Nutzerapplikation in Schritt a eine Liste von gesicherten Applikationen über einen sicheren Internetzugriff (HTTPS) von einem im Backend befindlichen und über das Internet erreichbaren Server 4 an, der diese Liste in Schritt b über eine ebenfalls gesicherte Verbindung (HTTPS) an den Systemagenten 1 zurücksendet. Anhand dieser Liste kann der Systemagent 1 respektive die Nutzerapplikation feststellen, welche Applikationen als gesicherte Applikationen gelten. Dabei ist jedes Objekt, mithin jede in der Liste enthaltene Applikation mit einem privaten Schlüssel (PrK_Config) signiert. Über den privaten Schlüssel kann die Integrität des Objektes untersucht und jegliche Veränderungen an dem Objekt erkannt werden. Jedes Objekt der Liste hat einen App Namen und ein App Zertifikat, das zur Signierung mit PrK_Config genutzt wird. Die Objekte werden in Schritt c im Zwischenspeicher des Systemagenten 1 gespeichert.

In Schritt d richtet die gesicherte Applikation 2 eine Anfrage insbesondere bezüglich Änderung einer Systemeinstellung in Form eines URI Requests an den Systemagenten 1. Um die Anfrage respektive gesicherte Applikation 2 zu verifizieren, werden in Schritt e die Objekte der im Systemagenten gespeicherten 1 Liste zunächst mittels eines öffentlichen Schlüssels mit PuK_Config verifiziert, der im Systemagenten 1 gespeichert ist. Nachfolgend wird in Schritt f anhand des Namens und des Zertifikates untersucht, ob die anfragende gesicherte Applikation 2 in der Liste enthalten ist.

Wenn die anfragende Applikation als gesicherte Applikation 2 verifiziert werden konnte, wird die Anfrage bezüglich der Änderung der Systemeinstellung in Schritt g ausgeführt und in Schritt h eine Bestätigung an die gesicherte Applikation 2 zurückgesendet. Bei einer nicht verifizierbaren Anfrage wird hingegen in Schritt i eine Fehlermeldung an die gesicherte Applikation 2 zurückgesendet.

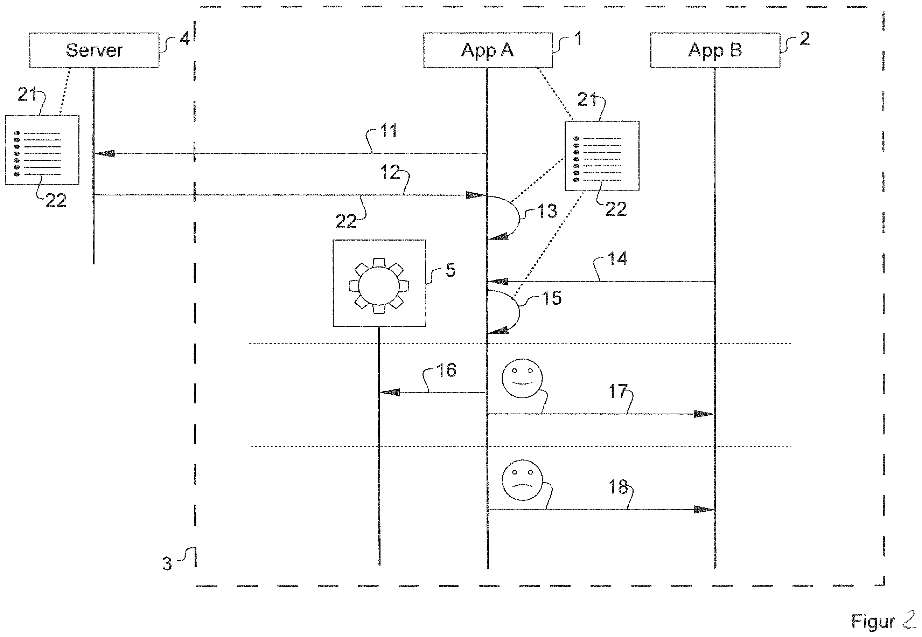

Figur 2 zeigt schematisch ein Mobiltelefon 3, in dem eine erste Anwendung 1 ("App A"), insbesondere als Systemagent oder Nutzeranwendung, und eine zweite Anwendung 2, insbesondere eine sichere Anwendung ("App A", "trusted App") zeitgleich ablaufen. Die erste Anwendung 1 ist als Systemanwendung auf dem Mobiltelefon vorinstalliert bzw. auf dem Betriebssystem des Mobiltelefons fest verankert. Die Systemanwendung 1 verfügt über ein Einstellungspaneel, mit dem ein Nutzer unmittelbar Änderungen an Systemeinstellungen 5 des Mobiltelefons 3 vornehmen kann. Beispielsweise können Datenverbindungen via Bluetooth, WLAN oder Mobilfunk an- bzw. ausgeschaltet sowie parametrisiert werden. In einem Systemspeicher des Mobiltelefons 3 sind die Systemeinstellungen 5 hinterlegt.

Die zweite Anwendung 2 ist eine sichere Nutzeranwendung, die über einen App-Store bezogen wurde. Dabei kann es sich beispielsweise um ein Spiel oder eine Navigationssoftware handeln, die im Wesentlichen keinerlei Einfluss auf die grundlegenden Funktionsweisen des Mobiltelefons hat. Die zweite Anwendung 2 kann im Wesentlichen ohne Einfluss auf die grundlegenden Funktionen des Mobiltelefons auch wieder deinstalliert werden, was bei der Systemanwendung 1 nicht möglich ist. Die Nutzeranwendung 2 verfügt über keinen unmittelbaren Änderungszugriff auf die Systemeinstellung 5.

Über einen solchen unmittelbaren Änderungszugriff verfügt allerdings die Systemanwendung 1. Für den Fall, dass die Nutzeranwendung 2 eine Änderung an den Systemeinstellungen 5 veranlasst, stellt die Nutzeranwendung 2 zunächst eine Anfrage 14 zur Änderung der Systemeinstellungen 5 an die Systemanwendung 1. Die Systemanwendung 1 verarbeitet die Anfrage in einem Schritt 15. Dabei überprüft die Systemanwendung 1, ob die Nutzeranwendung 2 dazu berechtigt ist, die angefragten Änderungen zu veranlassen. Ergibt diese Prüfung, dass die Nutzeranwendung 2 dazu berechtigt ist, die angefragten Änderungen zu veranlassen, so wird in einem Schritt 16 die betreffende Systemeinstellung 5 unmittelbar durch die Systemanwendung 1 geändert. Anschließend erfolgt eine positive Bestätigung der durchgeführten Änderungen entsprechend der Anfrage in einem Schritt 17 an die Nutzeranwendung 2. Ergibt die Überprüfung im Schritt 15, dass die Nutzeranwendung 2 nicht dazu berechtigt ist, die angefragten Änderungen zu veranlassen, werden die Änderungen an den Systemeinstellungen 5 nicht durchgeführt; vielmehr wird eine Fehlermeldung generiert und von der Systemanwendung 1 an die Nutzeranwendung 2 in einem Schritt 18 ausgegeben.

Bei der Überprüfung (Schritt 15), ob die Nutzeranwendung 2 berechtigt ist, die Änderung zu veranlassen, werden hinterlegte berechtigte Anwendungen 22 abgefragt, die in einer Liste 21 von Anwendungen und/oder Berechtigungen 22 zusammengefasst sind. Im vorliegenden Fall ist die Liste 21 in einem Speicher des Mobiltelefons 3 abgelegt, sodass die Systemanwendung 1 unmittelbar auf hinterlegten der Anwendungen/Berechtigungen 22 zugreifen kann. Die Berechtigungen geben an, welche Änderungen an welchen Systemeinstellungen 1 durch welche Nutzeranwendung 2 veranlasst werden darf. Entspricht die Anfrage 14 einer hinterlegten Berechtigung 22, so wird ein positives Überprüfergebnis ausgegeben und die Durchführung der Änderungen erfolgt im Schritt im Schritt 16.

Wie zuvor dargestellt, sind die Anwendungen/Berechtigungen 22 lokal im Endgerät abgespeichert. Diese können zuvor von einem Server 4, der an einem entfernten Ort angeordnet ist und über eine Datenfernverbindung, beispielsweise eine Internetverbindung, erreichbar ist, bezogen werden. Bevor eine Anfrage (Schritt 14) von der Nutzeranwendung 2 gestellt wird, stellt die Systemanwendung 1 eine Anforderungsanfrage 11 zur Übermittlung von Anwendungen/Berechtigungen 22 an den Server 4. Der Server 4 übermittelt dann (Schritt 12) einzelne Anwendungen/Berechtigungen 22 oder die gesamte Liste 21 von Anwendungen/Berechtigungen 22 an die Systemanwendung 1, welche diese im Endgerät 3 lokal abspeichert (Schritt 13).

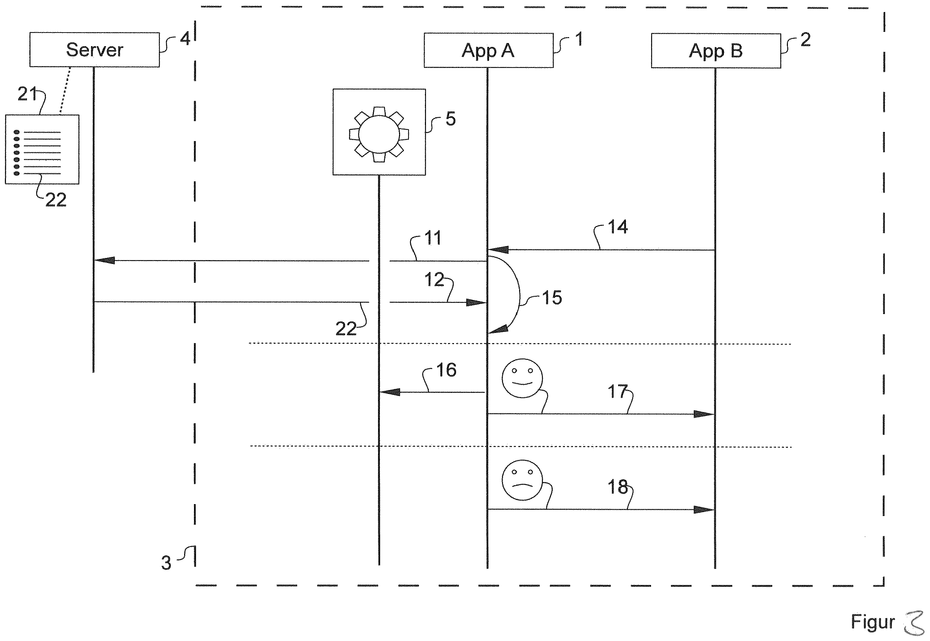

In Figur 3 ist eine alternative Ausgestaltung des Verfahrens gezeigt. Die Anwendungen/Berechtigungen 22 sind in dieser Variante nicht lokal auf dem Mobiltelefon 3 abgespeichert. Vielmehr erfolgt die Anfrage 11 zur Übermittlung von Anwendungen/Berechtigungen erst, nachdem die Nutzeranwendung 2 eine Anfrage 14 zur Änderung der Systemeinstellungen 5 an die Systemanwendung 1 gesendet hat. Die Übermittlung der Anwendungen/Berechtigungen 22 vom Server zur Systemanwendung 1 findet dann im Wesentlichen während der der Überprüfung 15 der Anfrage statt. Ansonsten ist das Verfahren nach Figur 2 weitgehend identisch zum Verfahren nach Figur 1. Selbstverständlich können die einmal an das Mobiltelefon 3 gesendeten Anwendungen/Berechtigungen 22 dort lokal abgespeichert bleiben und bei weiteren Anfragen berücksichtigt werden.

Das vorbeschriebene Verfahren ist nicht nur anwendbar bei Änderungen von Einstellungen an den Systemeinstellungen des Endgeräts; das Verfahren ist auch anwendbar, wenn Änderungen an Einstellungen 5 einer jeweils anderen Nutzeranwendung vorzunehmen sind. So kann beispielsweise die erste Anwendung 1 anstelle einer Systemanwendung auch eine andere Nutzeranwendung sein, deren grundlegende Einstellungen 5 durch eine andere Anwendung, nämlich die zweite Nutzeranwendung 2, geändert werden sollen. Auch hier werden Berechtigungen überprüft, die von einem Server 4 bezogen werden können.

### Bezugszeichenliste

- 1: Systemanwendung
- 2: Nutzeranwendung
- 3: Endgerät
- 4: Server
- 5: Systemeinstellungen

- 11: Anforderung der ersten Anwendung zur Übermittlung von Berechtigungen
- 12: Übermittlung von Berechtigungen vom Server zur ersten Anwendung
- 13: Abspeichern der empfangenen Berechtigungen
- 14: Anfrage der zweiten Anwendung zur Änderung von Systemeinstellungen
- 15: Überprüfen der Anfrage
- 16: Durchführen von Änderungen der Systemeinstellungen
- 17: Bestätigung der durchgeführten Änderung entsprechend der Anfrage
- 18: Fehlermeldung wegen nicht ausführbarer Anfrage

- 21: Sammlung von Berechtigungen
- 22: Berechtigung

## Patentansprüche

1. Verfahren zum Ändern von Einstellungen (5) einer ersten auf einem mobilen elektronischen Endgerät (3), insbesondere einem Mobiltelefon oder einem Tablet-PC, laufenden Anwendung,
wobei die erste Anwendung berechtigt ist, ihre eigenen Einstellungen (5) zu ändern, wobei auf dem Endgerät neben der ersten eine zweite Anwendung (1, 2) abläuft, die nicht über Fähigkeiten verfügt, Einstellungen (5) der ersten Anwendung (1) unmittelbar zu ändern,
**dadurch gekennzeichnet, dass**:
die erste Anwendung (1) eine beliebige, zur zweiten Anwendung (2) unterschiedliche Anwendung ist, deren interne Einstellungen (5) auf Veranlassung der zweiten Anwendung (2) durch die folgenden Verfahrensschritte geändert werden:
- die zweite Anwendung (2) sendet eine Anfrage (14) an die erste Anwendung (1) zur Änderung von Einstellungen (5) der ersten Anwendung (1);
- die erste Anwendung (1) veranlasst eine Überprüfung (15) der Berechtigung (22) der zweiten Anwendung (2), die angefragte Änderung der Einstellungen (5) zu veranlassen, wobei die Überprüfung anhand des Namens und eines Zertifikates der zweiten Anwendung in einer Liste berechtigter zweiter Anwendungen erfolgt,
- sofern die Überprüfung (15) ein positives Ergebnis erzeugt, wird eine Änderung (16) der Einstellungen (5) entsprechend der Anfrage (14) der zweiten Anwendung durchgeführt,

2. Verfahren nach Anspruch 1,
**dadurch gekennzeichnet,**
**dass** die erste Anwendung die Überprüfung (15) durchführt.

3. Verfahren nach einem der vorherigen Ansprüche 1 oder 2,
**dadurch gekennzeichnet,**
**dass** die erste Anwendung (1) die angefragten Änderungen der Einstellungen (5) umsetzt.

4. Verfahren nach einem der vorherigen Ansprüche,
**dadurch gekennzeichnet,**
**dass** eine Liste (21) von berechtigten zweiten Anwendungen und/oder von Berechtigungen (22) auf einem entfernten Server (4) hinterlegt sind, und dass, insbesondere von der ersten Anwendung (1), auf die hinterlegten Anwendungen/Berechtigungen (22) vor und/oder während der Überprüfung (15) zugegriffen wird.

5. Verfahren nach dem vorherigen Anspruch,
**dadurch gekennzeichnet,**
**dass** einzelne Anwendungen/Berechtigungen (22) der Liste (21) vor und/oder während der Überprüfung vom Server (4) auf das Endgerät (3) übertragen und im Endgerät (3) abgespeichert werden.

6. Mobiles elektronisches Endgerät (3), eingerichtet zur Durchführung des Verfahrens nach einem der vorherigen Ansprüche.

## Claims

1. A method for changing settings (5) of a first application running on a mobile electronic terminal (3), in particular a mobile phone or a tablet PC, wherein the first application is authorised to change its own settings (5), wherein apart from the first application a second application (1, 2) is running on the terminal, which does not have the capability of directly changing settings (5) of the first application (1),
**characterised in that**
the first application (1) is a random application being different from the second application (2), the internal settings (5) of which are changed at the instigation of the second application (2) by the following method steps:
- the second application (2) sends a request (14) to the first application (1) for changing settings (5) of the first application (1);
- the first application (1) initiates checking the authorisation (22) of the second application (2) to instigate the requested change of the settings (5), wherein checking is carried out by means of the name and a certificate of the second application in a list of authorised second applications,
- insofar as the check produces a positive result, a change (15) of the settings (5) is carried out in accordance with the request (14) of the second application.

2. The method according to claim 1, **characterised in that** the first application carries out the check (15).

3. The method according to one of the preceding claims 1 or 2, **characterised in that** the first application (1) implements the requested changes of the settings (5).

4. The method according to one of the preceding claims, **characterised in that** a list (21) of authorised second applications and/or of authorisations (22) is stored on a remote server (4), and **in that** the stored applications/authorisations are accessed by, in particular the first application prior to and/or during the check (15).

5. The method according to the preceding claim, **characterised in that** individual applications/authorisations (22) of the list (21) are transferred from the server (4) to the terminal (3) prior to and/or during the check and stored in the terminal (3).

6. A mobile electronic terminal (3) arranged to carry out the method according to one of the preceding claims.

## Revendications

1. Procédé pour modifier des réglages (5) d'une première application s'exécutant sur un terminal électronique mobile (3), en particulier un téléphone portable ou une tablette PC,
dans lequel la première application est habilitée à modifier ses propres réglages (5), dans lequel une deuxième application (1, 2) s'exécute sur le terminal en plus de la première, laquelle ne dispose pas de capacités à modifier directement des réglages (5) de la première application (1),
**caractérisé en ce que** :
la première application (1) est une application au choix, différente de la deuxième application (2), dont les réglages internes (5) sont modifiés à l'initiative de la deuxième application (2) grâce aux étapes suivantes du procédé ;
- la deuxième application (2) envoie une demande (14) à la première application (1) pour la modification de réglages (5) de la première application (1) ;
- la première application (1) initie une vérification (15) de l'habilitation (22) de la deuxième application (2) à initier la modification des réglages (5) demandée, dans lequel la vérification s'effectue à l'aide du nom et d'un certificat de la deuxième application dans une liste de deuxièmes applications habilitées,
- dans la mesure où la vérification (15) produit un résultat positif, une modification (16) des réglages (5) est effectuée conformément à la demande (14) de la deuxième application.

2. Procédé selon la revendication 1, **caractérisé en ce que** la première application effectue la vérification (15) .

3. Procédé selon l'une des revendications 1 ou 2, **caractérisé en ce que** la première application (1) réalise les modifications des réglages (5) demandées.

4. Procédé selon l'une des revendications précédentes, **caractérisé en ce qu'**une liste (21) de deuxièmes applications habilitées et/ou d'habilitations (22) sont enregistrées sur un serveur distant (4) et qu'en particulier la première application (1) accède aux applications/habilitations (22) enregistrées avant et/ou pendant la vérification (15).

5. Procédé selon la revendication précédente, **caractérisé en ce que** des applications/habilitations (22) individuelles de la liste (21) sont transmises par le serveur (4) au terminal (3) avant et/ou pendant la vérification et sont enregistrées sur le terminal (3).

6. Terminal électronique mobile (3) étudié pour la mise en oeuvre du procédé selon l'une des revendications précédentes.
